Europäisches Patentamt

European Patent Office

Office européen des brevets

(11) Numéro de publication : **0 458 663 A1**

(12) # DEMANDE DE BREVET EUROPEEN

(21) Numéro de dépôt : **91400972.5**

(51) Int. Cl.⁵ : **B23P 19/04, B23P 19/06**

(22) Date de dépôt : **11.04.91**

(30) Priorité : **21.05.90 FR 9006303**

(43) Date de publication de la demande :
**27.11.91 Bulletin 91/48**

(84) Etats contractants désignés :
**AT BE CH DE DK ES GB GR IT LI LU NL SE**

(71) Demandeur : **FERCO International USINE DE FERRURES DE BATIMENT**
**2 rue du Vieux Moulin REDING**
**F-57400 Sarrebourg (FR)**

(72) Inventeur : **Kautt, Jean-Jacques**
**24 rue Pertois**
**F-67000 Strasbourg (FR)**

(74) Mandataire : **Rodhain, Claude et al**
**Cabinet Claude Rodhain 30, rue la Boétie**
**F-75008 Paris (FR)**

(54) **Machine automatique de pose de gâches sur des dormants de fenêtres ou de porte-fenêtres.**

(57)  La présente invention concerne une machine automatique de pose de gâches sur des dormants de fenêtres ou de porte-fenêtres destinée à l'équipement de cadres de dormants préfabriqués et associés à un dispositif d'aménagement de dormants.

Cette machine est remarquable en ce qu'elle comporte au moins une unité de pose (P1) à déplacement relatif automatique par rapport au cadre du dormant (D).

De façon préférentielle, elle comporte également au moins une seconde unité de gâches (P2) destinée à la pose des gâches inférieures sur les dormants en particulier pour la réalisation d'oscillo-battant.

Les déplacements de la poutre (10), du chariot (13) et de l'unité de pose (P1) sont asservis afin de permettre la pose de gâches supérieures sur la traverse supérieure du dormant et également la pose de gâches sur les montants du dormant.

EP 0 458 663 A1

FIG.1

Déplacement

La présente invention se rapporte à une machine automatique de pose de gâches. En particulier cette machine est destinée à équiper des dormants de fenêtres ou porte-fenêtres.

Ces dormants sont destinés à recevoir un ou plusieurs ouvrants. Eventuellement dans le cas où il est prévu d'équiper le dormant de plusieurs ouvrants, le dormant comporte en plus d'un cadre classique une ou plusieurs traverses ou un ou plusieurs montants et le dormant est alors constitué de plusieurs sous-cadres. La machine conforme à l'invention permet la pose des gâches quelque soit la constitution du dormant à équiper.

Afin de permettre le montage du ou des ouvrants, le dormant doit être équipé de diverses ferrures et en particulier de gâches appropriées.

Il existe deux types de gâches à savoir celle n'assurant que la seule fonction de verrouillage de l'ouvrant sur le dormant et celle assurant en plus de cette fonction primaire également le déplacement en ouverture ou fermeture de l'ouvrant comme c'est le cas par exemple pour les ouvrants d'oscillo-battants.

Selon le mode d'ouverture du vantail, donc du type de ferrure, il est également nécessaire d'équiper de gâches l'un ou les deux montants ainsi que l'une ou les deux traverses.

Dans certains cas des gâches équipent toute la périphérie du dormant et il est d'usage de parler de ferrure périmétrale ou de fermeture périmétrale.

Dans la suite de la description par simplification, on considérera l'équipement d'un dormant, le terme dormant représentant tout autant un dormant simple que les sous-cadres dormants déjà décrits.

Selon un art antérieur encore couramment utilisé, le matériau constituant le dormant est traité ou fraisé pour recevoir les composants de pose qui sont quant à eux fixés manuellement. Il existe également des machines semi-automatiques qui sont constituées d'automates individuels dressés en ligne et devant lesquels on fait passer, soit un montant, soit une traverse. Cependant, les machines actuelles nécessitent toujours la présence d'opérateurs pour certaines manipulations du cadre ou dormant ou de l'outil. De plus, compte tenu des formes et constitutions différentes des composants, les lignes semi-automatiques actuelles nécessitent des outils ou automates divers et en fin de compte très souvent le poste manuel est conservé car plus rentable qu'une machine n'automatisant le travail que pour une application spécifique.

Le but de l'invention est de réaliser une machine totalement automatique et fonctionnant quelque soit le type de gâche ou le type de dormant, toute intervention manuelle étant supprimée, et le dormant nu étant amené automatiquement à la machine.

En particulier la présente machine permet la pose tout autant des gâches supérieures classiques que des gâches inférieures, ces dernières étant utilisées en particulier pour l'équipement d'oscillo-battants.

Pour ce faire la machine automatique de pose de gâches sur des dormants de fenêtres ou de porte-fenêtres destinée à l'équipement de cadres de dormants préfabriqués et associée à un dispositif d'amenage de dormant conforme à l'invention comporte au moins une unité de pose de déplacement relatif automatique par rapport au cadre du dormant.

Pour ce faire, cette unité de pose est équipée d'outils de pose et principalement d'au moins un poste de vissage et d'un tiroir de positionnement de gâches.

De façon préférentielle l'unité de pose est montée sur un chariot translatable longitudinalement sur une poutre elle-même translatable dans le sens perpendiculaire au sens de déplacement du chariot sur un châssis portique.

Ce mode de réalisation est préféré, mais l'on peut obtenir le même résultat en réalisant une unité de pose fixe et en asservissant la table sur la bande de transfert supportant le dormant.

Afin de permettre éventuellement la pose de gâches inférieures destinées en particulier à la réalisation d'oscillo-battants, la machine comporte au moins une seconde unité de pose de gâches de constitution et de montage identiques à la première unité.

Cette seconde unité est de préférence connectée à un vérin dont le corps fixé au châssis portique afin de pouvoir être escamotée ou au contraire amenée en position de travail selon le type de dormant à équiper.

L'invention est exposée ci-après plus en détail à l'aide de dessins représentant seulement un mode d'exécution.

– La figure 1 est une vue de dessus de la machine conforme à l'invention ;
– la figure 2 est une vue de face de la machine conforme à l'invention.

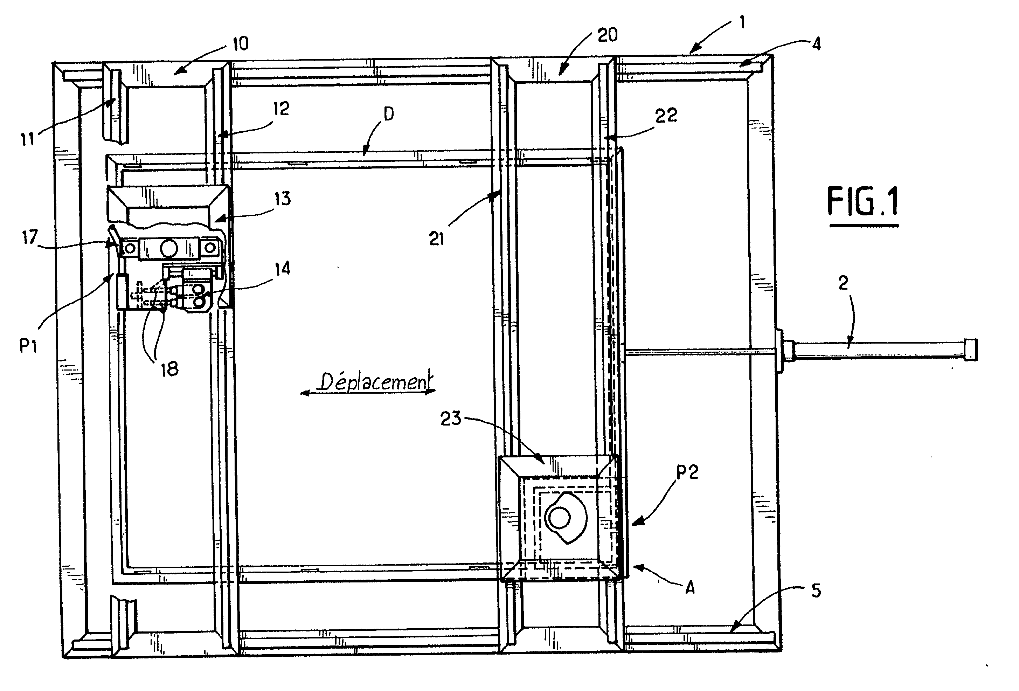

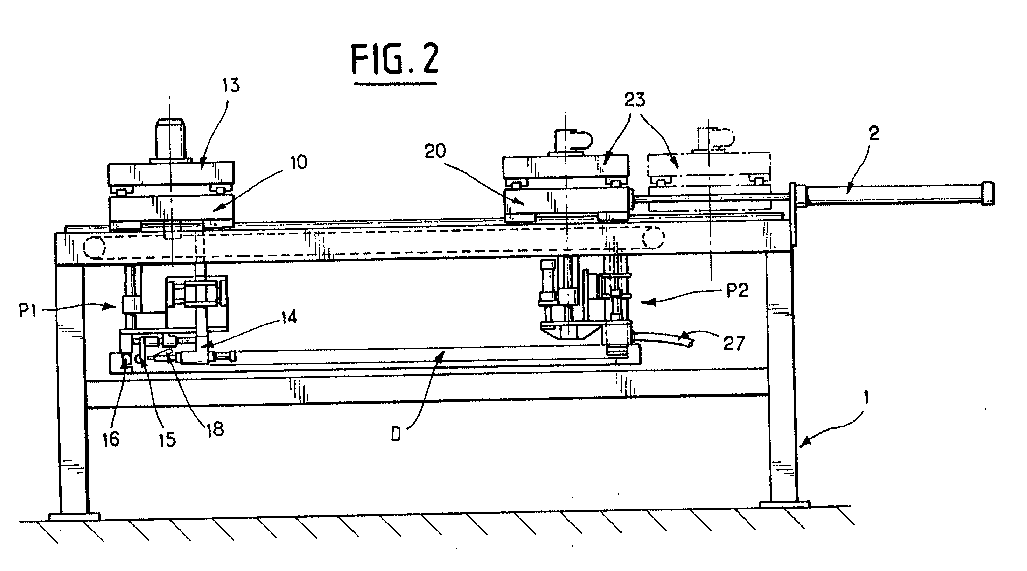

Les figures 1 et 2 ne représentent que la machine automatique de pose de gâches en soi. Sur la ligne d'équipement de dormants, elle est associée à des moyens d'aménagement du dormant, celui-ci étant disposé face extérieure sur le tapis et traverse supérieure en aval dans le sens du déplacement.

Comme on peut le voir sur les figures 1 et 2 la machine comporte en tant que support un châssis ou portique 1 équipé de moyens de déplacement du cadre, de préférence d'une bande de transfert ainsi que de moyens d'immobilisation du cadre, une fois celui-ci arrivé en positionnement d'équipement.

Le châssis 1 est pourvu de deux rails 4 et 5 sur lesquels sont disposés deux poutres 10 et 20.

Chacune de ces poutres comporte des rails longitudinaux 11 et 12, 21 et 22 sur lesquels se déplace longitudinalement à chaque poutre un module de pose de gâche P1, P2.

La figure 1 représente la machine lorsque le dormant D est positionné et bloqué en position d'équipement, et les modules de pose P1 et P2 prêts au montage des gâches.

L'une des poutres 20 est reliée à un vérin pneumatique ou équivalent 2, ce vérin 2 agissant pour escamoter la poutre 20 ou au contraire permettre sa mise en fonction dans le cas d'équipements de la traverse inférieure du dormant par des gâches inférieures.

L'autre poutre 10 a une course asservie pour venir équiper la traverse supérieure ainsi qu'éventuellement les montants du dormant D.

Pour permettre l'équipement en gâches inférieures, le module de pose P2 est donc déplacé sur les rails 21, 22 de la poutre 20 par simple translation et rotation sans nécessité de positionnement intermédiaire de 0° à 180° pour poser les gâches aux coins inférieurs du dormant. Par contre, le module de pose de gâches supérieures P1 est équipé d'un dispositif de rotation sur 180° afin d'équiper d'une part la traverse supérieure et d'autre part éventuellement les montant du dormant D.

Chaque module de pose est donc principalement équipé d'un fut tournant par rapport au chariot 10, 20 afin de permettre aux outils de pose d'effectuer leur rotation.

Ces outils de pose sont en particulier visibles sur la figure 2, ils comportent un flexible d'alimentation en gâches 17, 27, un poste de vissage 14 auquel est associé des flexibles d'alimentation en vis 18, un dispositif de maintien 15 et un tiroir de positionnement de la gâche 16.

Les outils de pose afin de permettre l'adaptation à tout type de dormant sont également déplaçables verticalement.

Les pièces dont doivent être approvisionnés les outils de pose (gâches, vis) sont stockées et alimentées par des systèmes de bol vibrant associé à un flexible afin que les moyens de stockage de pièces n'ait pas à suivre le déplacement des outils de pose.

De façon automatique, par programme les outils de pose viennent se disposer à l'emplacement de pose, la pose et la fixation du type de gâche étant sélectionnées également par programme.

Une fois l'unité de pose P1 en place, le tiroir de positionnement 16 est descendu par vérin sur l'emplacement travaillé du dormant D correspondant et la gâche est libérée du tiroir 16 et maintenue par un dispositif de maintien 15 qui éventuellement peut également servir de gabarit. Ensuite c'est le dispositif de vissage 14 qui est manoeuvré pour assurer le vissage et pour se faire il comporte deux têtes alimentées par un flexible d'alimentation en vis 18. Ces deux têtes de vissage peuvent être fixes l'une par rapport à l'autre lorsque les cotes de fixation sont standards ou leurs distances peuvent être réglables en fonction du tiroir 16 servant alors de gabarit pour le positionnement et le vissage aux emplacements des orifices des gâches.

Les dispositifs décrits ci-dessus équipent l'unité de pose P1 et également l'unité de pose P2. Cette dernière peut également recevoir d'autres outils d'apprêt du dormant tels que fraisage, perçage etc... selon les besoins.

Dans le cas d'application préféré à savoir l'équipement de gâches inférieures d'oscillo-battants pour lesquels le mode basculant de l'ouvrant doit permettre le dégagement du galet inférieur de la ferrure de l'ouvrant tout en évitant sa sortie hors de la gâche, les codes de fixation et les dimensions sont différentes des autres gâches de verrouillage.

Le principe de la machine décrite ci-dessus peut être modifié pour sortir du cadre de l'invention.

En particulier il est possible de réunir toutes les opérations effectuées pour toutes sortes de gâches sur une seule unité de pose et c'est alors les moyens de convoyage du dormant qui réalisent le déplacement et le positionnement du dormant aux différentes cotes souhaitées où une gâche doit être posée. Dans ce cas l'unité de pose comporte les dispositifs d'outillage décrits ci-dessus, seul le positionnement relatif entre l'unité de pose et le dormant étant inversé.

## Revendications

1 - Machine automatique de pose de gâches sur des dormants de fenêtres ou de porte-fenêtres destinée à l'équipement de cadres de dormants (D) préfabriqués et associée à un dispositif d'aménagement du dormant, caractérisée en ce qu'elle comporte :

– un support de dormant,

– au moins un ensemble à mouvements croisés comportant une poutre (10 ; 20 ) mobile en translation par rapport à ce support selon une première direction, et un chariot (13 ; 23) mobile en translation par rapport à cette poutre selon une deuxième direction, perpendiculaire à la première,

– montée sur ce chariot, une unité de pose de gâche (P1 ; P2) comportant :

. un dispositif de positionnement ( 16) et de maintien (15) de la gâche à poser, et

. au moins un poste de vissage (14).

2 - Machine selon la revendication 1 caractérisée en ce que le poste de vissage (14) est mobile dans le plan vertical.

3 - Machine selon la revendication 1 ou 2, caractérisée en ce qu'elle comporte en outre un flexible (27) d'alimentation des gâches.

4 - Machine selon la revendication 2 ou 3, caractérisée en ce qu'elle comporte en outre un flexible (18) d'alimentation en vis du poste de vissage (14).

5 - Machine selon la revendication 1, caractérisée en ce que l'unité de pose (P1 ; P2) est montée sur le chariot par l'intermédiaire d'un fût rotatif.

6 - Machine selon la revendication 1, caractérisée en ce qu'elle comporte au moins deux unités de pose de gâches (P1 ; P2) opérant simultanément sur un même dormant.

7 - Machine selon la revendication 1, caractérisée en ce que la poutre (20) est connectée à un vérin (2) dont le corps est fixé au châssis portique (1).

8 - Machine selon la revendication 1, caractérisée en ce que les déplacements relatifs de la poutre (10), du chariot (13) et de l'unité de pose (P1) sont asservis.

FIG.1

Déplacement

FIG.2

Office européen
des brevets

**RAPPORT DE RECHERCHE EUROPEENNE**

Numero de la demande

EP 91 40 0972

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,Y | EP-A-401094 (FERCO)<br>* colonne 5, lignes 30 - 34; revendications 1, 2; figures 2b, 3b * | 1, 2 | B23P19/04<br>B23P19/06 |
| A | | 6, 7 | |
| Y | DE-A-2361926 (VEB KOMBINAT ELEKTROPROJECT UND ANLAGENBAU)<br>* page 4, lignes 1 - 8; revendication 1 * | 1, 2 | |
| A | | 3, 4, 8 | |
| A | EP-A-240968 (KNAUST)<br>* abrégé * | 5 | |
| P,A | EP-A-387124 (FERCO)<br>* colonne 8, ligne 55 - colonne 9, ligne 18 * | 5 | |
| A | DE-U-8908450 (MAYER & CO)<br>* page 1, lignes 1 - 7 * | 1 | |

| | | | DOMAINES TECHNIQUES RECHERCHES (Int. Cl.5) |
|---|---|---|---|
| | | | B23P<br>E05B<br>E06B |

Le présent rapport a été établi pour toutes les revendications

| Lieu de la recherche | Date d'achèvement de la recherche | Examinateur |
|---|---|---|
| LA HAYE | 02 AOUT 1991 | RIS M. |

EPO FORM 1503 03.82 (P0402)